(19) Europäisches Patentamt
European Patent Office
Office européen des brevets

(11) EP 0 654 055 B1

(12) **EUROPÄISCHE PATENTSCHRIFT**

(45) Veröffentlichungstag und Bekanntmachung des Hinweises auf die Patenterteilung:
**03.12.1997 Patentblatt 1997/49**

(21) Anmeldenummer: **94906762.3**

(22) Anmeldetag: **09.08.1993**

(51) Int Cl.6: **C08G 18/62**

(86) Internationale Anmeldenummer:
**PCT/EP93/02135**

(87) Internationale Veröffentlichungsnummer:
**WO 94/03516 (17.02.1994 Gazette 1994/05)**

# (54) WASSERVERDÜNNBARES BESCHICHTUNGSMITTEL AUF BASIS VON POLYACRYLATEN UND POLYISOCYANATEN

POLYACRYLATE AND POLYISOCYANATE-BASED WATER-DILUTABLE COATING AGENT

AGENT DE RECOUVREMENT DILUABLE DANS L'EAU, A BASE DE POLYACRYLATES ET DE POLYISOCYANATES

(84) Benannte Vertragsstaaten:
**AT BE CH DE DK ES FR GB GR IT LI NL PT SE**

(30) Priorität: **08.08.1992 DE 4226270**

(43) Veröffentlichungstag der Anmeldung:
**24.05.1995 Patentblatt 1995/21**

(73) Patentinhaber: **Herberts Gesellschaft mit beschränkter Haftung**
**42285 Wuppertal (DE)**

(72) Erfinder:
- **PATZSCHKE, Hans-Peter**
  **D-42279 Wuppertal (DE)**
- **SCHWAN, Heinrich**
  **D-42287 Wuppertal (DE)**

(74) Vertreter: **Türk, Gille, Hrabal, Leifert**
**Brucknerstrasse 20**
**40593 Düsseldorf (DE)**

(56) Entgegenhaltungen:
**EP-A- 0 003 235**
**EP-A- 0 358 979**
**EP-A- 0 496 210**
**EP-A- 0 523 994**
**EP-A- 0 540 985**
**WO-A-93/05087**
**DE-C- 3 805 629**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 654 055 B1

## Beschreibung

Die Erfindung betrifft ein wäßriges Beschichtungsmittel, insbesondere ein wäßriges Zweikomponenten-(2K)Überzugsmittel aus speziellen wäßrigen OH-gruppenhaltigen Copolymerisatharzen und Polyisocyanaten, ein Verfahren zu seiner Herstellung und seine Verwendung bei der Oberflächenbehandlung, wie in der Automobillackierung, der Kunststofflackierung oder der allgemeinen Lackierindustrie.

Auf dem Gebiet der Automobillackierung sind (2K)-Polyurethanbeschichtungssysteme bekannt. Als Bindemittel werden übliche Polymere eingesetzt, die noch funktionelle Gruppen, z.B. OH-Gruppen tragen. Werden diese mit Polyisocyanaten kurz vor der Applikation gemeinsam gemischt, so werden üblicherweise 2K-Überzugsmittel erhalten, die schon bei Raumtemperatur vernetzen. Übliche Systeme liegen in organischen Lösemitteln gelöst vor, da die NCO-Gruppen mit protischen Lösemitteln oder Wasser reagieren können.

In der EP-A-0 358 979 werden wäßrige 2K-Polyurethansysteme beschrieben, die aus einer wäßrigen Dispersion von OH-Gruppen enthaltenden Acrylatharzen die keinen Gehalt an Ethylenoxid-Einheiten aufweisen, in die flüssige Polyisocyanatkomponenten eindispergiert werden, bestehen. Die daraus erhaltenen Überzüge haben den Nachteil, daß ihre mechanische Beständigkeit, z.B. die Kratzbeständigkeit, nicht ausreicht. Ebenso genügen Glanz, sowie die Haftung nach Schwitzwasserbelastung nicht hohen Anforderungen.

In der EP-A-0 061 628 werden hydrophil modifizierte aromatische Polyisocyanate, in der EP-A-0 206 059 aliphatische Polyisocyanate mit Hilfe von Emulgatoren in Wasser emulgiert und als Zusatzmittel für wässrige Klebstoffe auf Basis von in Wasser dispergierten Polymeren wie beispielsweise Copolymerisaten von olefinisch ungesättigten Monomeren verwendet. Der Nachteil dieses Verfahrens liegt in der zu hohen Reaktivität, bzw. des zu kurzen Potlifes. Es werden Filme erhalten, die an der Oberfläche kleben und keine optischen Eigenschaften zeigen.

In der EP-A-0 469 389 und der DE-A-40 36 927 werden wäßrige 2K-Polyurethan-Überzugsmittel beschrieben, die eine wäßrige Polyurethandispersion bzw. Polyacrylatdispersion und ein in Wasser dispergierbares Polyisocyanat enthalten, das mit Polyethylenglykol modifiziert ist. Diese Systeme weisen eine sehr kurze Topfzeit und unzureichende optische Eigenschaften (Bildung von Trübungen) auf.

Normalerweise werden wasserverdünnbare Acrylatharze durch Einpolymerisieren von hydrophilen, ethylenisch ungesättigten Monomeren hergestellt. Bei Verwendung von sauren, anionenbildenden Monomeren in den üblichen Mengen treten bei Kombination der wäßrigen Acryldispersion mit freien NCO-Gruppen-enthaltenden Polyisocyanaten Blasen in den aufgespritzten Filmen bei höherer Schichtdicke beim Trocknen auf.

Unter "wäßrigen Dispersionen" werden hier heterogene Systeme verstanden, bei denen die organische Harzphase als Tröpfchen oder Teilchen mit einer mittleren Größe von 1 - 3000 nm in Wasser verteilt ist.

Aufgabe der Erfindung ist es, ein Überzugsmittel zur Verfügung zu stellen, das umweltfreundlich ist und glatte, kratzfeste sowie vergilbungsfreie Decklacküberzüge mit sehr hohem Glanz liefert, die auch beim Spritzen in hohen Schichtdicken blasenfrei ausgehärtet werden können.

Die Aufgabe wird dadurch gelöst, daß ein Überzugsmittel mit Wasser als Hauptlösemittel zur Verfügung gestellt wird, das enthält:

A) 40 bis 95 Gew.-%, bevorzugt 50 bis 90 Gew.-%, mindestens eines OH-Gruppen enthaltenden Bindemittels als wäßrige Dispersion eines Polymersatharzes oder eines Gemisches von Polymerisatharzen auf der Basis olefinisch ungesättigter Verbindungen, wobei das Polymerisatharz oder das Gemisch im Durchschnitt eine OH-Zahl von 10 bis 300, ein Zahlenmittel der Molmasse (Mn) von 500 bis 200000 und jeweils bezogen auf 100 g Harzfestkörper einen Gehalt an Säurefunktionen von 1 bis weniger als 80 mEqu und einen Gehalt an Ethylenoxideinheiten von 1 bis weniger als 150 mEqu aufweist, wobei, die Summe der Säurefunktionen und der Ethylenoxideinheiten von 2 bis 200 mEqu beträgt, wobei die Säurefunktionen gegebenenfalls zumindest teilweise neutralisiert sind,

B) 60 - 5 Gew.-%, bevorzugt 50 bis 10 Gew.-%, eines oder mehrerer Polyisocyanate mit mehr als einer freien Isocyanatgruppe, die bei Raumtemperatur, gegebenenfalls unter Zusatz eines oder mehrerer organischer Lösemittel, flüssig sind, wobei sich die Gewichtsprozente von A) und B) jeweils auf den Harz-Festkörpergehalt beziehen und auf 100 Gew.-% addieren, sowie

C) gegebenenfalls ein oder mehrere zusätzliche Bindemittel, übliche Pigmente, Füllstoffe und/oder lackübliche Additive und Hilfsstoffe.

Die Polymerisatharze der Komponente A) können ein Gemisch aus einem oder mehreren Polymerisatharzen mit Säurefunktionen und einem oder mehreren Polymerisatharzen mit mit mindestens einer Ethylenoxid enthaltenden Kette (z.B. seitenständigen Kette) sein. Die Komponente A) enthält jeweils bezogen auf 100 g Harzfestkörper einen Gehalt an 1 bis weniger 80 mEqu Säurefunktionen und einen Gehalt an 1 bis weniger 150 mEqu Ethylenoxideinheiten, wobei die Summe der Säurefunktionen und Ethylenoxideinheiten 2 bis 200 mEqu beträgt.

Zur Verwendung als Komponente B weisen die Di- bzw. Polyisocyanate bevorzugt eine Viskosität von 0,5 bis 2000 mPas, vorzugsweise über 1 und unter 1000 mPas, besonders bevorzugt unter 200 mPas auf (gemessen bei 23°C),

was gegebenenfalls durch organischen Lösemittelzusatz erzielt werden kann.
Das erfindungsgemäße wasserverdünnbare Überzugsmittel enthält gegebenenfalls weitere übliche lacktechnische Additive, wie Neutralisationsmittel, Katalysatoren, Sikkative, Lichtschutzmittel, Lösemittelanteile, Pigmente sowie gegebenenfalls weitere Bindemittelbestandteile.

Geeignete OH-gruppenhaltige Polymerisatharze (Komponente A) sind beispielsweise in der EP-A-0 358 979 und in der DE-A-27 58 122 beschrieben. Es handelt sich um Polyolkomponenten auf Basis von polymerisierten olefinisch ungesättigten Verbindungen. Die reaktiven OH-Gruppen können über Copolymerisation von entsprechenden ungesättigten OH-Gruppen enthaltenden Monomeren in das Bindemittelmolekül eingeführt werden. Das Bindemittel soll reaktive Hydroxylgruppen entsprechend einer OH-Zahl von 10 bis 300 enthalten. Sie liegt bevorzugt über 40, besonders bevorzugt über 60 und bevorzugt unter 200, besonders bevorzugt unter 150. Weiterhin enthält das Bindemittelmolekül ionische Gruppen oder in ionische Gruppen überführbare Substituenten, wie z.B. Sulfonat-, Carboxylat- oder Phosphorsäuregruppen, die durch entsprechend substituierte Monomere eingeführt werden. Bevorzugt sind Carboxylgruppen.
Säurefunktionen, z.B. Carboxylgruppen enthaltende Comonomere werden in derartigen Anteilen bezogen auf die gesamten Monomeren bei der Herstellung der Polymerisatharze so gewählt, daß auf 100 g Harzfestkörper von 1 bis weniger als 80 mEqu, bevorzugt weniger als 75 mEqu, besonders bevorzugt weniger als 50 und insbesondere weniger als 30 mEqu erhalten werden. Die sauren Gruppen können gegebenenfalls durch Neutralisation in ionische Gruppen überführt werden. Es wird ein Neutralisationsgrad von 50 bis 100 % der Säuregruppen bevorzugt. Die zahlenmittlere Molmasse ($M_n$) beträgt von 500 bis 200000 g/mol und liegt bevorzugt über 2000, besonders bevorzugt über 5000; die obere Grenze liegt bevorzugt unter 50000 und besonders bevorzugt unter 30000, gemessen mit Gelpermeationschromatographie in Tetrahydrofuran gegen Polystyrol-Standard, unter üblichen Bedingungen.
Die Wasserdispergierbarkeit der Bindemittel wird von der Anzahl der eingeführten ionischen Gruppen und Ethylenoxideinheiten aufweisenden lateralen oder terminalen Ketten bestimmt. Enthalten die Bindemittel eine zu hohe Anzahl von ionischen Gruppen, so ist die Stabilität des späteren Überzugsfilms gegen Wasser eingeschränkt. Die Anzahl der reaktiven Hydroxylgruppen muß so groß sein, daß eine ausreichende Vernetzung sichergestellt ist. Sind zu wenig OH-Gruppen vorhanden, so vernetzt der Film nicht ausreichend und seine mechanische Stabilität ist schlecht.
Das hydroxylgruppenhaltige, wasserverdünnbare Polymerisatharz kann auch aus einem Gemisch oder Präkondensat von zwei verschiedenen Komponenten bestehen, von denen die saure Komponente A1) Carboxyl- und Hydroxylgruppen, die Komponente A2) Hydroxylgruppen enthält, wobei solche Mengenverhältnisse ausgewählt werden, daß die Mischung von Carboxy- und Hydroxy-Äquivalenten der Komponente A) entspricht. Die Polyethylenoxidketten können sowohl in die Komponente A1) als auch in die Komponente A2) eingebaut werden. Besonders bevorzugt werden als Komponente A1) ein niedermolekulares, carboxylgruppenhaltiges und als Komponente A2) ein hochmolekulares, hydroxylgruppenhaltiges, nicht modifiziertes lineares Polymerisatharz eingesetzt.
Beispielsweise werden 90 bis 40 Gew.-T der Komponente A1) mit 20 bis 190 mEqu COOH/100 g mit 10 bis 60 Gew.-% der Komponente A2) in einem solchen Verhältnis gemischt, daß die Summe der Mengen A1) und A2) gleich 100 ist und die mEqu der Säurefunktionen des Gemisches gleich oder unter den geforderten Grenzwerten für die Einzelkomponente A) liegen. Dabei gilt

$$\text{mEqu} \qquad A_1 = \frac{100 \text{ x mEqu A}}{\text{Menge } A_1}$$

Bevorzugte Mengen bestehen aus 50 Gew.-% Komponente $A_1$) zu 50 Gew.-% $A_2$). Besonders bevorzugt wird das Verhältnis 40 : 60, speziell 30 : 70. Die Komponenten A1) und A2) können auch präkondensiert werden. Dabei wird unter Präkondensation das Erwärmen der Komponenten $A_1$) und $A_2$) im Gemisch auf solche Temperaturen verstanden, daß ein definierter Viskositätsanstieg zu beobachten ist.

Die Herstellung von wasserdispergierbaren hydroxylgruppenhaltigen Copolymerisaten aus olefinisch ungesättigten Monomeren ist im Prinzip bekannt. Es können die üblichen ungesättigten Monomeren ohne weitere funktionelle Gruppen eingesetzt werden. Beispiele für solche Monomere sind aromatische ungesättigte Monomere, wie Styrol und alkylierte Styrole; Vinylverbindungen, wie Vinylacetat und Vinylester der Versaticsäure, Acrylnitril, Methacrylnitril, Ester der Acrylsäure oder Methacrylsäure mit 1 bis 18 C-Atomen mit linearem oder verzweigtem aliphatischem, cycloaliphatischem oder arylaliphatischem Alkoholrest wie z.B. Methylacrylat, Isopropylacrylat, n-Butylacrylat, Laurylacrylat, Cyclohexylmethacrylat, Benzylacrylat; funktionelle Gruppen oder polare Gruppen können durch entsprechend substituierte Ester, wie Alkoxyalkyl(meth)acrylate, z.B. Ethoxyethylacrylat oder Furfurylacrylat eingeführt werden. Durch geeignete Mischung der Komponenten wird die Glasübergangstemperatur des Polymeren und seine Verträglichkeit mit dem Härter eingestellt. Bevorzugt werden möglichst hohe Anteile an Styrol und langkettigen Acryl- oder Methacrylsäureestern.

Monomere mit funktionellen Gruppen sind beispielsweise Hydroxyalkylester der Acryl- oder der Methacrylsäure

mit bevorzugt 2 bis 4 Kohlenstoffatomen im Alkylrest, wie z.B. 2-Hydroxyethylacrylat oder Hydroxybutylacrylat sowie Allylalkohol. Eine andere Gruppe von OH-funktionellen Monomeren sind Hydroxyalkylamide der Acryl- oder Methacrylsäure wie beispielsweise N-Hydroxyethylmethacrylsäureamid. Monomere mit mehreren OH-Gruppen werden beispielsweise durch Hydrolyse von Glycidylmethacrylat oder Reaktion von Glycid mit (Meth)acrylsäure erhalten. Über solche funktionellen Monomere können nach der Polymerisation gegebenenfalls auch polymeranaloge Reaktionen durchgeführt werden, d.h. es können weitere Modifizierungen des Bindemittelmoleküls vorgenommen werden. Weitere reaktive Monomere sind z.B. N-Alkoxymethyl (meth)acrylamide.

Der hier verwendete Ausdruck (Meth)acryl- bzw. -(meth)acryl bedeutet Acryl und/oder Methacryl- bzw. -acryl- und/oder -methacryl-.

Als Monomere, die in ionische Gruppen überführbare Substituenten einbringen, sind beispielsweise olefinisch ungesättigte Mono- oder Dicarbonsäuren mit einer Molmasse von 72 bis 250 geeignet, wie beispielsweise Acrylsäure, Methacrylsäure, Fumarsäure, Maleinsäure oder Halbester davon, Itaconsäure oder ungesättigte Monomere, die Sulfongruppen aufweisen, wie beispielsweise 2-Acrylamido-2-methylpropansulfonsäure. Acrylsäure und Methacrylsäure werden bevorzugt.

Die Einführung von Polyethylenoxideinheiten kann nach bekannten Methoden erfolgen, beispielsweise durch Einpolymerisieren von ungesättigten Co-Monomeren, die Polyalkylenoxidreste enthalten oder durch polymeranaloge Umsetzung von hydroxylgruppenhaltigen (Meth)-Acrylcopolymeren mit isocyanatgruppenhaltigen Polyethylenoxid-Verbindungen. Es wird ein Eigenschaftsoptimum angestrebt durch Einsatz von einer möglichst geringen Menge einer Kombination von Carboxylgruppen und Polyethylenoxideinheiten. Der Gehalt an Ethylenoxideinheiten beträgt mehr als ein Milliequivalent (mEqu), speziell mehr als 5 mEqu, besonders bevorzugt mehr als 20 mEqu, wobei die obere Grenze unter 150 mEqu, bevorzugt unter 100 mEqu und besonders bevorzugt unter 75 mEqu Ethylenoxideinheiten/100 g Festharz beträgt.

Beispiele für erfindungsgemäß verwendbare einpolymerisierte Monomere entsprechen der allgemeinen Formel

$$CH_2{=}CR\text{-}X\text{-}(CH_2\text{-}CHR\text{-}O)_m\text{-}(CH_2\text{-}CH_2\text{-}O)_nR,$$

wobei R = -H oder $C_{1-4}$-Alkyl, bevorzugt -$CH_3$, X = -COO-, -CONH-, -O- oder -$CH_2$- und n = 2 - 90, bevorzugt über 5 und unter 25 und m = 0 bis 40, bevorzugt unter 20 ist oder

$$CH_2{=}CR\text{-}X\text{-}(CH_2)_o\text{-}Y\text{-}(CH_2\text{-}CHR\text{-}O)_m\text{-}(CH_2\text{-}CH_2\text{-}O\text{-})_nR$$

ist, wobei zusätzlich Y = -O- oder -NH- und o = 1 bis 4 bedeuten.

Bei segmentartig aufgebauten Polyalkylenoxidketten haben mehr als 40 Gew.-%, bevorzugt mehr als 65 Gew.-% der Alkylenoxideinheiten Ethylenoxidstrukturen, wobei die Ethylenoxideinheiten vorzugsweise am Ende der Kette liegen. Die entsprechenden Monomeren werden durch Kondensation der Polyethylenglykolmonoalkylether mit den ungesättigten Monomeren oder durch Umsetzung von protonen-aktiven, ungesättigten Monomeren mit Alkylenoxiden hergestellt.

Beispiele hierfür sind das Kondensationsprodukt von Acrylsäure oder Methacrylsäure mit Polyethylenoxidmonomethylether mit einem Molekulargewicht von 350 bis 750 oder die Umsetzung von Hydroxypropylmethacrylat erst mit einem Teil Propylenoxid und dann mit vier Teilen Ethylenoxid zu Produkten mit verschiedenem Molekulargewicht.

Das durch Copolymerisation entstandene hydroxylgruppenhaltige Copolymerisat kann beispielsweise mit Verbindungen der allgemeinen Formel

$$OCN\text{-}R\text{-}NH\text{-}COO\text{-}X\text{-}Y$$

umgesetzt werden, wobei

R einem zweiwertigen linearen, verzweigten oder ringförmigen Kohlenwasserstoffrest, der zur Herstellung von Polyisocyanaten üblich ist, bevorzugt Diisocyanaten entspricht.

Y ist ein monofunktioneller Rest eines Kettenstarters wie beisielsweise -OR' oder -$NR'_2$, wobei R' eine Alkylgruppe eines einwertigen Kohlenwasserstoffrestes mit ein bis acht Kohlenstoffatomen, vorzugsweise ein unsubstituierter Alkylrest oder speziell eine Methylgruppe bedeutet. Alkohole, wie Methanol oder n-Butanol werden bevorzugt.

X ist eine Polyalkylenglykolkette mit zwei bis neunzig, bevorzugt über fünf und unter 25 Polyethylenoxideinheiten. Sie kann gegebenenfalls zusätzlich mit anderen Polyalkylenoxideinheiten wie Polypropylenoxid oder Butylenoxid modifiziert sein. Solche Verbindungen können z.B. aus Diisocyanaten durch Umsetzung mit den entsprechenden

Polyalkylenethermonoalkoholen im NCO/OH-Equivalentverhältnis von ca. 2 : 1 hergestellt werden.

Beispiele für Diisocyanate, die für die Modifizierung des OH-Acrylats geeignet sind, haben die allgemeine Formel:

$$O = C = N - R - N = C = O \qquad II$$

in welcher R für einen aromatischen, gegebenenfalls mit einer oder mehreren Alkylgruppen substituierten oder Methylenbrücken aufweisenden Kohlenwasserstoffrest mit insgesamt 6 bis 15 Kohlenstoffatomen, einen verzweigten oder linearen aliphatischen Kohlenwasserstoffrest mit 2 bis 18, vorzugsweise 6 bis 10 Kohlenstoffatomen, einen oder mehreren aromatischen Ringen, einem acyclischen Kohlenwasserstoffrest mit 6 bis 15 Kohlenstoffatomen oder einen heterocyclischen Ring steht.

Es können alle Isomeren oder Isomerengemische von organischen Diisocyanaten eingesetzt werden. Als aromatische Diisocyanate eignen sich z.B. die Isomeren von Phenylendiisocyanat, Toluylendiisocyanat, Xylylendiisocyanat, Bisphenylendiisocyanat oder Naphtylendiisocyanat.

Bevorzugt eingesetzt werden aliphatisch-aromatische Diisocyanate der Formel

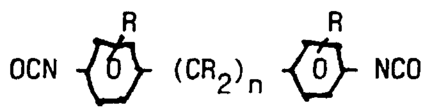

(III)

wobei R gleich oder verschieden sein kann und Wasserstoff oder ein Alkylrest mit 1 bis 8 C-Atomen, vorzugsweise 1 oder 2 C-Atomen, speziell $-CH_3$ ist und n eine ganze Zahl von 1 bis 10, bevorzugt 1 bis 3 bedeutet. Typische Beispiele für diese Art von Diisocyanaten sind Diphenylmethan-2,4' und/oder -4,4'-diisocyanat, 3,2'-Diisocyanat-4-methyldiphenylmethan oder Diphenylpropandiisocyanat.

Eine andere Gruppe von bevorzugt eingesetzten Diisocyanaten sind solche, deren NCO-Gruppe direkt an einen linearen, verzweigten oder cycloaliphatischen Rest gebunden ist. Solche Diisocyanate sind Verbindungen der Formel:

$$O = C = N - (CR_2)_r - N = C = O \qquad (IV)$$

wobei r ganzzahlig von 2 bis 20, insbesondere 6 bis 8 ist und R gleich oder verschieden sein kann und Wasserstoff oder einen Alkylrest mit 1 bis 8 C-Atomen, vorzugsweise 1 oder 2 C-Atomen, darstellt.

Hierunter fallen beispielsweise Propylendiisocyanat, Ethylethylendiisocyanat, Dimethylethylendiisocyanat, Methyltrimethylendiisocyanat, Trimethylhexandiisocyanat, Pentamethylendiisocyanat-1,5, 2-Methylpentandiisocyanat-1,5, Hexamethylendiisocyanat-1,6, Dodecandiisocyanat-1,12 oder Octadecandiisocyanat-1,18.

Die Isocyanatgruppen können auch an einen cycloaliphatischen Rest gebunden sein, wie beispielsweise Cyclopentan-diisocyanat, 1,4-Bis(isocyanat)cyclohexan oder Bis-(4-isocyanatcyclohexyl)-methan. Aromatische oder cycloaliphatische Kohlenwasserstoffe können auch über $-CR'_2$-Gruppen, wobei R' die gleiche Bedeutung wie vorher hat, mit Isocyanatgruppen verknüpft sein. Beispiele hierfür sind 1,3-Bis-(2-isocyanatmethyl)-cyclohexan, Isophorondiisocyanat oder Tetra-methylen-xylylendiisocyanat.

Die Copolymerisation kann in Masse, Lösung oder Emulsion unter Verwendung von ionischen oder radikalischen Initiatoren erfolgen. Vorzugsweise erfolgt die Herstellung in organischer Lösung in kontinuierlichen oder diskontinuierlichen Polymerisationsverfahren, unter Verwendung von radikalischen Initiatoren. Als Lösemittel kommen beispielsweise Aromaten wie Toluol oder Xylol, Ester wie Butylacetat oder Methoxypropylacetat, Ether wie Propylglykoldiether, Tetrahydrofuran oder Ethylglykoldiether, Ketone wie Aceton oder Methylethylketon, aber auch Alkoxyethanole oder Alkoxypropanole, sowie Alkohole in Betracht. Der Gehalt an Lösemitteln kann durch Destillation, bevorzugt im Vakuum, vor der Weiterverarbeitung vermindert werden. Bevorzugt sind Lösemittel, die bei der späteren Verwendung der Bindemittel im Überzugsmittel nicht stören.

Die Copolymerisation erfolgt in bekannter Weise unter Zusatz von in Radikale zerfallende Initiatoren bzw. durch geeignete Redox-Reaktionen gegebenenfalls auch mit Reglern bei erhöhter Temperatur, z.B. bei 50 bis 160°C. Sie erfolgt bei der Lösungspolymerisation in einer Flüssigkeit, in der sich Monomere und Polymere mit Initiatoren gemeinsam lösen.

Als Initiatoren, die in organischen Lösemitteln löslich sind, können z.B. übliche Peroxide und/oder Azoverbindungen eingesetzt werden, wobei übliche Mengen, wie z.B. 0,1 bis 5 Gew.-% bezogen auf die eingesetzte Monomerenmenge Verwendung finden können. Als Initiatoren können z.B. Peroxide, Hydroperoxide, Perester oder thermisch in Radikale zerfallenden Azoverbindungen oder labile C-C-Bindungen enthaltende Substanzen eingesetzt werden.

Durch den Einsatz von üblichen Reglern kann die Molmasse in bekannter Weise herabgesetzt werden. Bevorzugt werden hierzu Mercaptane, halogenhaltige Verbindungen und andere radikalübertragende Substanzen eingesetzt. Besonders bevorzugt sind n- oder tert.-Dodecylmercaptan, Tetrakismercaptoacetylpentaerythrit, alpha-Dimethylstyrol oder 1,3-Dioxolan. Sie werden im allgemeinen in Mengen von höchstens 3 Gew.-%, bezogen auf das Monomerengemisch, zugegeben.

Nach beendeter Herstellungsreaktion werden die carboxylgruppenhaltigen Polymerisatharze in eine wäßrige Dispersion überführt. Hierzu wird entweder die organische Polymerlösung in eine meist vorgewärmte Wasserphase eingeleitet oder in die organische Polymerlösung Wasser zugegeben und gegebenenfalls das organische Lösemittel destillativ, im allgemeinen unter Anlegen eines Vakuums, entfernt.

Um eine gute Dispergierbarkeit in Wasser zu erreichen, wird entweder vor dem Emulgieren in das Harz oder in der Wasserphase ein Neutralisationsmittel, wie z.B. anorganische Basen, Ammoniak oder primäre, sekundäre oder tertiäre Amine oder Aminoalkohole zugesetzt, um saure zumindest teilweise Gruppen in anionische Gruppen überzuführen. Als anorganische Basen dienen beispielsweise Natriumhydroxid, Kaliumhydroxid oder Lithiumhydroxid. Als Amine werden z.B. Trimethylamin, Mono-, Di- und Triethylamin, Mono-, Di- und Triethanolamin, Dimethylethanolamin, Dimethylisopropanolamin, Methyldiethanolamin, Dimethylaminoethylpropanol oder N-Methyl-Morpholin eingesetzt. Bevorzugt werden flüchtige tertiäre Amine, die keine isocyanatreaktiven Gruppen enthalten. Die Neutralisationsmittel können sowohl im stöchiometrischen Unter- als auch Überschuß verwendet werden. Bevorzugt sind 50 bis 100 % der vorhandenen Carboxylgruppen neutralisiert. Bei der Herstellung der Dispersion ist darauf zu achten, daß mit steigendem Neutralisationsgrad durch den Polyelektrolytcharakter der Polymeren eine deutliche Viskositätszunahme erfolgen kann. Um einen möglichst hohen Festkörper zu erhalten, wird daher im allgemeinen mit der für die Stabilität der Dispersion gerade ausreichenden Menge an Neutralisationsmittel gearbeitet. Ein Zusatz von geringen Anteilen Polyamin mit zwei oder mehr sekundären und/oder primären Aminogruppen ist für die Verringerung der Blasenbildung beim Spritzen der Lacke von Vorteil. Die Aminogruppen können an aliphatischen, cycloaliphatischen, ar-aliphatischen oder aromatischen Kohlenwasserstoffgrundgerüsten mit linearer, verzweigter oder cyclischer Struktur gebunden sein. Diamine werden bevorzugt. Geeignete Beispiele sind Ethylendiamin, 1,2- und 1,3-Propandiamin, 1,4-Butandiamin, 2-Methyl-pentan-diamin, Hexandiamin-1,6, 3-Amino-1-methyl-amino-propan, N-Methyl-dipropylentriamin, 3-Amino-1-cyclohexylaminopropan, N,N'-Dimethylethylendiamin, 2,2-Dimethyl-1,3-propandiamin, 1-Amino-3-amino-3,5,5-trimethyl-cyclohexan (Isophorondiamin), 1,2- und 1,4-Cyclohexandiamin, 4,4-Diamino-dicyclohexyl-methan, 3,3-Dimethyl-4,4'-diaminodicyclohexylamin, Piperazin, 2,5-Dimethylpiperazin, N,N'-Bis-(2-aminoethyl)-piperazin, p, m oder o-Phenylendiamin, 4,4-Diamino-diphenylmethan, Polyoxypropylenamine wie 4,9-Dioxadodecan-1,12-diamin oder 4,7,10-Trioxa-tridecan-1,13-diamin und/oder Aminoethylethanolamin. Zur Gewährleistung der Stabilität der Lack/Härter-Emulsion muß auch nach dem Abreagieren der NH-funktionellen Polyamine eine ausreichend hohe Konzentration der Neutralisationsmittel erhalten bleiben. Das wird durch ein Equivalentverhältnis von tertiären Aminen zu NH-funktionellen Polyaminen von 2 : 1 bis 6 : 1 bei einem Neutralisationsgrad von 60 bis 110 %, bevorzugt über 70 und unter 100 % erreicht. Die erhaltenen wäßrigen Dispersionen weisen im allgemeinen noch einen Gehalt an Restlösemittel von unter 10 Gew.-%, vorzugsweise von unter 5 Gew.-% auf. Die praktisch restlose Entfernung auch von höher als Wasser siedenden Lösemitteln ist beispielsweise durch azeotrope Destillation möglich.

Der Festkörpergehalt der erhaltenen Acrylatdispersionen beträgt beispielsweise 20 bis 60 Gew.-%, bevorzugt über 30 Gew.-% und unter 45 Gew.-%.

Bei der Polyisocyanatkomponente B) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind oder durch Zusatz organischer Lösemittel verflüssigt sind. Die Polyisocyanatkomponenten B weisen bei 23°C im allgemeinen eine Viskosität von 0,5 bis 2000 mPa.s, vorzugsweise über 1 und unter 1000 mPa.s auf, besonders bevorzugt unter 200 mPas. Bevorzugt handelt es sich bei der Polyisocyanatkomponente B um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3. Sie haben bevorzugt einen NCO-Gehalt von über 5 Gew.-%, bevorzugt unter 35 Gew.-%, besonders bevorzugt unter 25 Gew.-%.

Falls erforderlich, können die Polyisocyanate in Abmischung mit geringen Mengen an inerten Lösemitteln zum Einsatz gelangen, um die Viskosität auf einen Wert innerhalb der genannten Bereiche abzusenken. Die Menge derartiger Lösemittel wird jedoch maximal so bemessen, daß in den letztendlich erhaltenen erfindungsgemäßen Beschichtungsmitteln maximal 20 Gew.-% Lösemittel, bevorzugt unter 10 %, bezogen auf die Menge an Wasser, vorliegt, wobei auch das gegebenenfalls in den Polyurethandispersionen noch vorliegende Lösemittel mit in die Berechnung eingeht. Für die Polyisocyanate geeignete Lösemittel sind beispielsweise aromatische Kohlenwasserstoffe wie Benzol, Toluol, Xylol, Chlorbenzol, Ester wie Ethylacetat, Butylacetat, Methylglykolacetat, Ethylglykolacetat, Methoxypropylacetat, Ether

wie Tetrahydrofuran, Dioxan, vollveretherte Mono- oder Diglykole von Ethylenglykol oder Propylenglykol wie Diethylenglykol oder Dipropylenglykoldimethylether, Ketone wie Aceton, Methylethylketon, halogenhaltige Lösemittel wie Methylenchlorid oder Trichlormonofluorethan.

Bei den erfindungsgemäß geeigneten, jedoch weniger bevorzugten aromatischen Polyisocyanaten handelt es sich insbesondere um übliche sogenannte "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die ebenfalls im Anschluß an ihre Herstellung vorzugsweise destillativ von überschüssigen monomeren Diisocyanaten befreit worden sind.

Als Komponente B) besonders gut geeignet sind beispielsweise "Lackpolyisocyanate" auf Basis von Hexamethylendiisocyanat, 1-Isocyanato-3,3,5-trimethyl-5-isocyanatomethyl-cyclohexan (IPDI) und/oder Bis(isocyanatocyclohexyl)-methan und die an sich bekannten Biuret-, Allophanat-, Urethan- und/oder Isocyanuratgruppen aufweisenden Derivate dieser Diisocyanate, die im Anschluß an ihre Herstellung, vorzugsweise durch Destillation von überschüssigen Ausgangsdiisocyanat bis auf einen Restgehalt von weniger als 0,5 Gew.-% befreit worden sind. Hierzu gehören Biuretgruppen aufweisende Polyisocyanate auf Basis von Hexamethylendiisocyanat, die aus Gemischen von N,N',N"-Tris(6-isocyanatohexyl)-biuret mit untergeordneten Mengen seiner höheren Homologen, sowie die cyclischen Trimerisate von Hexa-methylendiisocyanat, die im wesentlichen aus N,N',N"-Tris-(6-isocyanatohexyl)-isocyanurat im Gemisch mit untergeordneten Mengen von seinen höheren Homologen bestehen. Insbesondere bevorzugt werden Gemische aus Uretion- und/oder Isocyanuratgruppen aufweisenden Polyisocyanaten auf Basis von Hexamethylendiisocyanat, wie sie durch katalytische Oligomerisierung von Hexamethylendiisocyanat unter Verwendung von Trialkylphosphinen entstehen. Um das Verteilen der Komponente B) in der wäßrigen Dispersion A zu erleichtern, kann das Polyisocyanat zumindest anteilweise mit Polyethylenoxidalkohol oder ionischen Gruppen modifiziert werden. Eine solche Arbeitsweise ist jedoch bei den erfindungsgemäß eingesetzten fettsäuremodifizierten Polyester und/oder Polyurethanharzen nicht unbedingt erforderlich. Als vorteilhaft hat sich eine hydrophobe Modifizierung mit langkettigen Fettalkoholen ergeben.

Für den erfindungsgemäßen Einsatz als Komponente B) werden besonders bevorzugt sterisch gehinderte Polyisocyanate der allgemeinen Formel

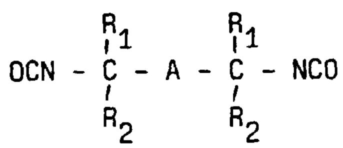

(I)

und/oder davon abgeleiteter Polyisocyanate mit mehr als einer freien Isocyanatgruppe, worin die Reste $R_1$ und $R_2$ jeweils gleich oder verschieden sein können, und

$R_1$ = -H oder vorzugsweise $-C_n H_{2n+1}$,
$R_2$ = $-C_n H_{2n+1}$,

wobei

n = eine ganze Zahl von 1 bis 12, bevorzugt von 1 bis 4, und
A = eine einfache Bindung, ein aromatischer oder alicyclischer Rest, oder ein linearer oder verzweigter aliphatischer Rest mit 1 bis 12 Kohlenstoffatomen ist.

Diese liegen besonders bevorzugt im Gemisch mit einem oder mehreren Polyisocyanaten mit mehr als einer freien Isocyanatgruppe vor, die bei Raumtemperatur flüssig sind oder durch Zusatz organischer Lösemittel verflüssigt sind, vorliegen können.

Besonders bevorzugt werden Polyisocyanate mit 4 bis 25, vorzugsweise 4 bis 16 C-Atomen, die in 2-Stellung zur NCO-Gruppe eine oder zwei lineare, verzweigte oder cyclische Alkylgruppen mit 1 bis 12, bevorzugt 1 bis 4 C-Atomen, enthalten.

Bei den von den Diisocyanaten der allgemeinen Formel I abgeleiteten Polyisocyanaten handelt es sich beispielsweise um NCO-haltige Prepolymere, die aus den Diisocyanaten durch Umsetzung mit niedermolekularen polaren Verbindungen erhalten werden können. Durch anteilweisen Einbau von Polyethylenoxidresten oder ionisierbaren Gruppen kann beispielsweise die Emulgierbarkeit erhöht werden. Die Einführung polarer Gruppen steigert die Verträglichkeit mit der Komponente A).

Weitere Beispiele für von den Diisocyanaten der allgemeinen Formel I abgeleiteten Polyisocyanate sind höhere Homologe bzw. modifizierte Derivate davon.

Höhere Homologe der sterisch behinderten Diisocyanate nach Formel I können beispielsweise durch Umsetzung von überschüssigem Diisocyanat mit Wasser, mehrwertigen Polyalkoholen, wie Glycerin, Trimethylolpropan, Pentaerythrit oder geeigneten OH-Oligomeren und anschließende destillative Entfernung des nicht umgesetzten Diisocyanat-Überschusses erhalten werden. Weitere einsetzbare Polyisocyanate sind Uretdione oder Isocyanurate der Diisocyanate. Bei ihrer Herstellung entstehen je nach gewählter Katalysierung Gemische aus Uretdion- und/oder Isocyanurat-Gruppen aufweisende Polyisocyanate. Ein Beispiel für einen weiteren Modifizierungsweg ist die Reaktion mit definierten Wassermengen unter Bildung von Biureten.

Bei der Modifizierung der sterisch behinderten Diisocyanate der allgemeinen Formel I können im Gemisch normale, das heißt sterisch nicht behinderte Polyisocyanate mitverwendet werden. Dabei werden im Gemisch bevorzugt 1 bis 60 Gew.-%, insbesondere mehr als 5 Gew.-% und weniger als 40 Gew.-% Diisocyanate nach der allgemeinen Formel I, bzw. ihre höherfunktionellen Derivate, eingesetzt, wobei sich die Gewichtsprozente auf die gesamten Polyisocyanate beziehen. Ein erfindungsgemäß geeignetes Prepolymer kann auch durch Einpolymerisieren einer Verbindung erhalten werden, die neben einer radikalisch oder ionisch polymerisierbaren Doppelbindung noch mindestens eine sterisch behinderte Isocyanatgruppe enthält wie beispielsweise Allylmonoisocyanat, Vinyl-phenylisocyanat, (Meth)acrylsäure-β-isocyanato-ethylester, (Meth)acryloyl-isocyanat oder bevorzugt m- oder p-Isopropenyl-alpha,alpha'-di-methylbenzylisocyanat. Eine Verbesserung der Emulgierbarkeit der Polyisocyanate mit hydrophilen Gruppen, wie Carboxylgruppen oder Polyethergruppen ist nicht unbedingt erforderlich. Verbesserung der Emulgierbarkeit können die Polyisocyanate mit hydrophilen Gruppen, wie Carboxylgruppen oder Polyethergruppen modifiziert sein.

Beispiele für die verwendbaren sterisch behinderten Diisocyanate sind 1,1,6,6-Tetramethyl-hexamethylendiisocyanat-, 1,6,-Dibutyl-pentamethylendiisocyanat-1,5, 1,4-Di-methyl-cyclohexandiisocyanat-1,4,p- oder m-Tetramethylxylylendiisocyanat der Formeln

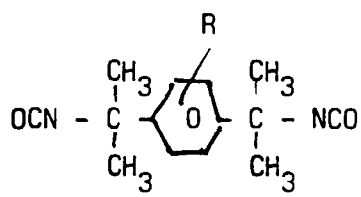

und

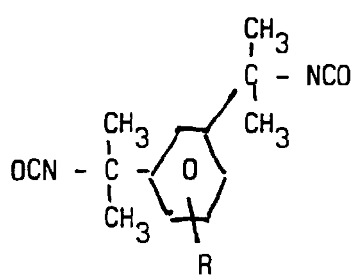

worin R die Bedeutung von H oder $C_1$ - $C_4$ - Alkyl hat und die entsprechenden hydrierten Homologen. Diese Diisocyanate können auch zu höherfunktionellen Verbindungen umgesetzt sein, beispielsweise durch Trimerisierungs, Umsetzung mit Wasser oder mit mindestens dreiwertigen Alkoholen, wie Trimethylolpropan. Tetramethylxylylendiisocyanat und sein Reaktionsprodukt mit Trimethylolpropan werden besonders bevorzugt. Es können auch trimerisierte Diisocyanate verwendet werden, deren Diisocyanate nur eine sterisch behinderte Isocyanatgruppe enthalten, wie z.B. 3 (4)-Isocyanatomethyl-1-methylcyclohexylisocyanat.

Die Polyisocyanatkomponente B kann als Gemisch verschiedener Polyisocyanate, z.B. als beliebige Mischung der

vorstehend als Beispiele genannten Di- und Polyisocyanate vorliegen. Mischungen aus zwei- und höherfunktionellen Polyisocyanaten sind bevorzugt.
Die sterisch behinderten Diisocyanate der allgemeinen Formel I und die davon abgeleiteten Polyisocyanate können im Gemisch mit einem oder mehreren Polyisocyanaten mit mehr als einer freien Isocyanatgruppe vorliegen. Es handelt sich hierbei bevorzugt um solche, deren Isocyanatgruppen sterisch nicht behindert, also reaktiver sind. Es handelt sich hierbei um beliebige organische Polyisocyanate mit aliphatisch, cycloaliphatisch, araliphatisch und/oder aromatisch gebundenen, freien Isocyanatgruppen, die bei Raumtemperatur flüssig sind, was gegebenenfalls durch Zusatz organischer Lösemittel bewirkt wird. Bevorzugt handelt es sich um Polyisocyanate oder Polyisocyanatgemische mit ausschließlich aliphatisch und/oder cycloaliphatisch gebundenen Isocyanatgruppen mit einer mittleren NCO-Funktionalität von 1,5 bis 5, bevorzugt 2 bis 3.

Beispiele für diese im Gemisch mit einsetzbaren Polyisocyanate sind aromatische Polyisocyanate, z.B. übliche sogenannte "Lackpolyisocyanate" wie sie vorstehend zur Definition der Komponente B als Beispiele angegeben wurden.

Eine weitere Gruppe geeigneter aliphatischer Polyisocyanate wird durch selektive Reaktion silylierter Polyalkohole mit Isocyanaten hergestellt. Esterisocyanate auf Basis von Hexandiisocyanat und Pentaerythrit weisen z.B. besonders günstige niedrige Viskositäten auf. Die Polyisocyanatkomponente B kann aus beliebigen Mischungen der beispielshaft genannten Di- und Polyisocyanate bestehen.

Für eine Steigerung der Topfzeit hat es sich beispielsweise bewährt, beliebige aliphatische Isocyanate, bevorzugt Diisocyanate, mit den vorstehend genannten sterisch behinderten Di- und Polyisocyanaten auf der Basis der allgemeinen Formel I zu mischen.

Um eine gute Dispergierbarkeit der Polyisocyanate zu erzielen, kann eine geeignete niedrige Viskosität eingestellt werden. Hierzu dient auch das Lösen von hochviskosen oder festen Polyisocyanaten in wassermischbaren organischen Lösemitteln, die nicht oder nur langsam mit Isocyanaten reagieren. Nichtreaktive Lösemittel sind beispielsweise Glykoldialkylether wie Glykoldimethylether, Ester wie Ethylglykolacetat, Ketone wie Aceton oder Dioxan oder N-Methylpyrrolidon. Bevorzugt werden Alkohole mit sterisch behinderten Alkoholgruppen, Ketonalkohole oder Alkoxyalkanole wie Butoxyethanol, Butyldiglykol, Methoxyisopropanol oder Diacetonalkohol. Mit ihnen wird kurz vor der Verarbeitung ohne Erwärmen (z.B. bis maximal 1 - 2 Stunden) eine Polyisocyanat-Lösung hergestellt, die bei einem Festkörper über 40 Gew.-%, bevorzugt 50 - 95 Gew.-%, eine Viskosität von 0,5 bis 2000 mPas, bevorzugt 1 bis 20 mPas hat. Durch dieses Verfahren wird eine feine Verteilung des Polyisocyanats im Überzugsmittel erreicht ohne Einbau von hydrophilen Gruppen in das Polyisocyanat. Außerdem sind auch hochviskose oder feste Polyisocyanate ohne Probleme verarbeitbar.

Erfindungsgemäß ist es nicht notwendig Emulgatoren zuzusetzen; dies schließt jedoch den Einsatz von Emulgatoren nicht aus; zur besseren Verteilung können auch übliche externe Emulgatoren, speziell nicht-ionische Emulgatoren, zugesetzt werden.

Verwendbare Emulgatoren sind beispielsweise Stoffe, deren Moleküle einen ausgesprochen hydrophilen Bestandteil mit einem ausgesprochenen Hydrophoben verbinden. Als hydrophiler Teil dienen anionische, kationische und amphotere ionische Gruppen, sowie nicht-ionische Gruppen. Als hydrophober Bestandteil dienen aromatische, cyclische, lineare oder verzweigte aliphatische Ketten verschiedener Kettenlänge, gegebenenfalls mit Ester- oder Amidgruppen, die endständig mit anionischen, kationischen, amphoteren oder nicht-ionischen Gruppen versehen sind. Bevorzugt werden Emulgatoren, deren Gruppen die Vernetzungsreaktion der Polyisocyanate bei der Filmbildung nicht sötren. Beispiele hierfür sind Reaktionsprodukte von langkettigen Fettsäuren, Alkoholen oder alkylierten Phenolen mit Alkylenoxiden mit 10 bis 70 Alkylenoxideinheiten; bevorzugt werden reine Polyethylenoxideinheiten oder gemischte Ethylen-propylenoxidketten in Form von Blockcopolymeren. Besonders geeignet sind Emulgatoren, die zusätzlich solche reaktiven Gruppen enthalten, die während der Verfilmung in das Netzwerk einreagieren, beispielsweise über reaktive Doppelbindungen. Es können beispielsweise übliche Handelsprodukte eingesetzt werden.

Die erfindungsgemäßen Überzugsmittel können gegebenenfalls Pigmente, wie z.B. in der DIN 55 944 beschrieben, oder Füllstoffe enthalten. Beispiele dafür sind organische Farbpigmente und anorganische Pigmente und Füllstoffe, wie Eisenoxide, Bleioxide, Titandioxid, Bariumsulfat, Glimmer, Kaolin oder verschiedene Sorten von Kieselsäure. Der Teilchendurchmesser der Pigmente ist bevorzugt kleiner als 15 µm. Ebenso ist es möglich, zumindest anteilsweise vernetzte organische Füllstoffe einzusetzen, soweit diese die notwendige Kornfeinheit aufweisen. Der Einsatz von Pigmenten oder Füllstoffen richtet sich nach dem Zweck des Überzugsmittels. So sind beispielsweise für Klarlacküberzüge transparente Pigmente bevorzugt, wie z.B. Siliciumdioxid oder Titandioxid. Für Basislacküberzüge sind beispielsweise organische Farbpigmente oder Effektpigmente wie z.B. Metalleffektpigmente bevorzugt. Für die Verwendung als Grundierung sind Titandioxid, Bariumsulfat, Kaolin sowie Korrosionsschutzpigmente bevorzugt.

Die Menge der Pigmente richtet sich nach dem Verwendungszweck des Überzugsmittels, beispielsweise weniger als 10 Gew.-% (transparente Pigmente), bei Klarlacküberzugsmitteln, 3 bis 35 Gew.-% bei Basislacküberzugsmitteln, sowie 30 bis 200 Gew.-% bei Grundierungsüberzugsmitteln. Dabei können Grundierungsüberzugsmittel, die Korrosionsschutzpigmente enthalten, bevorzugt als Korrosionsschutzgrundierunn eingesetzt werden. Als Füllerschicht dienen

sie zum Glätten der Oberfläche; wenn sie besonders elastisch eingestellt sind, können sie als Steinschlagschutzschicht eingesetzt werden.

Die erfindungsgemäßen Dispersionen können, falls gewünscht, während oder nach ihrer Herstellung mit anderen üblichen Bindemitteln, z.B. Polyestern, Polyurethanen sowie Hartharzen, unmodifizierten und modifizierten Polymeren, wie sie z.B. bei H, Kittel, Lehrbuch der Lacke und Beschichtungen, Bd. I, Teil 1, S. 122-445, beschrieben sind, kombiniert werden. Tragen die zusätzlichen Bindemittel reaktive Gruppen, wie beispielsweise Hydroxylgruppen, so sind diese bei dem Mischungsverhältnis der Komponenten A mit B zu berücksichtigen. Bevorzugt liegen diese zusätzlichen Bindemittel in wäßriger Dispersion vor. Der Mengenanteil soll unter 30 Gew.-%, bevorzugt unter 20 Gew.-%, betragen, bezogen auf die Summe der filmbildenden Harze.

Weiterhin kann das Überzugsmittel lacktechnische Additive enthalten, beispielsweise Lichtschutzmittel, rheologiebeeinflussende Mittel, wie hochdisperse Kieselsäure oder polymere Harnstoffverbindungen; Verdicker, wie anvernetzte Polycarbonsäure oder Polyurethane; Antiabsetzmittel, Verlaufsmittel, Antischaummittel wie beispielsweise silikonhaltige Verbindungen; Benetzungsmittel sowie gegebenenfalls Katalysatoren oder Sikkative. Unter Benetzungsmittel werden auch die bekannten Pastenharze verstanden, die zum besseren Dispergieren und Vermahlen der Pigmente eingesetzt werden. Zum Beschleunigen der Reaktion können Katalysatoren wie beispielsweise Amine oder Schwermetallsalze eingesetzt werden. Es ist jedoch auch möglich, das Zwei-Komponenten-Überzugsmittel ohne Katalysator unter forcierten Trocknungsbedingungen zu härten.

Als Lösemittel, die gegebenenfalls in geringen Mengen zugesetzt werden können, sind übliche lacktechnische Lösemittel geeignet. Diese können von der Herstellung der Bindemittel stammen oder nachträglich als Additiv zugesetzt werden. Es ist günstig, wenn die Lösemittel zumindest teilweise mit Wasser mischbar sind. Beispiele für solche Lösemittel sind Glykolether, z.B. Diethylenglykoldimethylether, Ethoxypropanol, Methoxypropylacetat, Butylglykol; Alkohole wie Diacetonalkohol, Glykole wie Ethylenglykol; N-Methylpyrrolidon sowie Ketone. Über die Auswahl der Lösemittel kann der Verkauf sowie die Viskosität des Überzugsmittels beeinflußt werden. Über den Siedepunkt der eingesetzten Lösemittelmischung wird das Abdunstverhalten gesteuert.

Die Pigmente und Additive können in der Komponente A und/ oder in der Komponente B vorliegen. Es ist sicherzustellen, daß keine Reaktion mit den Bindemittelbestandteilen stattfindet. Beispielsweise können die Pigmente in speziellen Pastenharzen angerieben werden und danach der Komponente A oder der Komponente B zugesetzt werden. Ebenso ist es möglich, die Pigmente beispielsweise in der wäßrigen Dispersion der Bindemittel A anzureiben. Verfahren zum Dispergieren und Vermahlen der Pigmente sind in der Literatur bekannt. Die Additive zum Einstellen von geeigneten Verarbeitungsparametern können beiden Komponenten zugesetzt werden, solange eine Verträglichkeit mit der jeweiligen Komponente gegeben ist.

Die Komponente A der erfindungsgemäßen Überzugsmittel kann bevorzugt auch ein OH-gruppenhaltiges Gemisch sein, bestehend aus einer carboxylgruppenhaltigen Komponente A3) und einer polyoxyethylenoxidgruppenhaltigen Komponente A4). Beispielsweise werden 95 bis 60 Gew.-T der Komponente A3) mit 5 bis 40 Gew.-T der Komponente A4) in einem solchen Verhältnis gemischt, daß in A3) der Gehalt an Säurefunktionen weniger als 800 mEqu und in A4) ein Gehalt an Ethylenoxideinheiten von weniger als 150 mEqu und die Summe beider Funktionen und Komponenten 1 bis 200 mEquiv. beträgt, wobei sich die Äquivalente stets auf die Gesamtmenge von A3) und A4) beziehen.

Die Herstellung des gebrauchsfertigen Beschichtungsmittels erfolgt kurz vor der Verarbeitung durch einfaches Verrühren der beiden Komponenten A und B bei Raumtemperatur. Dabei kann die Polyisocyanatkomponente B in eine neutralisierte konzentrierte oder verdünnte wäßrige Polymerdispersion zugegeben werden. Das gelöste bzw. dispergierte Polymerisat übernimmt dabei die Funktion eines Emulgators. Durch Zusatz von weiterem Wasser wird die geeignete Verarbeitungsviskosität eingestellt. Unter "wäßriger Dispersion" werden hier heterogene Systeme verstanden, bei denen die organische Harzphase als Tröpfchen oder Teilchen beispielsweise mit einer mittleren Größe von 1 bis 3000 nm, bei monomodalen Verteilungen bevorzugt über 50 und unter 200 nm, bei bimodalen bevorzugt Komponente 1 über 50 und unter 150 nm, sowie Komponente 2 über 200 und unter 500 nm in Wasser verteilt ist. Säurezahl bzw. Neutralisationsgrad sind gegebenenfalls in Kombination mit der Zahl der PolyethylenoxidEinheiten so abzustimmen, daß die gewünschten Teilchengrößen beim Dispergieren des Harzes unter optimalen Dispergierbedingungen entstehen. Die Mengenverhältnisse der Polyolkomponente und der Polyisocyanatkomponente werden bevorzugt so bemessen, daß ein NCO/ OH-Verhältnis von 0,5 : 1 bis 5 : 1, besonders bevorzugt von 0,8 : 1 bis 2 : 1 eingehalten wird. Die Überzugsmittel besitzen eine Topfzeit von 0,5 bis maximal 24 Stunden, bevorzugt über 1, besonders bevorzugt über 2 Stunden. Diese wird durch die Art der Isocyanate und ihre Verteilung im Lacksystem beeinflußt. Sie kann weiterhin durch Zusatz eines üblichen Katalysators gesteuert werden.

Das Überzugsmittel wird beispielsweise durch Rollen, Walzen oder Spritzen aufgetragen. Die applizierten Schichtdicken richten sich nach dem Verwendungszweck des Überzugsmittels. Beispielsweise weisen Klarlacküberzüge eine Schichtdicke bis zu 60 µm auf, pigmentierte Basis- oder Decklacküberzüge von 10 bis 50 µm, Überzüge als Füller oder Steinschlagschutzüberzüge eine Schichtdicke von 30 bis zu 100 µm, Überzüge als Korrosionsschutzgrundierung eine Schichtdicke von 20 bis 70 µm. Das applizierte Überzugsmittel kann bei erhöhten Temperaturen, z.B. von 10 bis 120°C vernetzt werden. Bevorzugt sind Temperaturen von 20 bis 80°C, z.B. 25 bis 80°C. Dabei können auch temperaturempfindliche Substrate beschichtet werden.
Als Substrate eignen sich verschiedenste Materialien, beispielsweise Metalle, Kunststoffe und Holz, sowie auch andere Substrate. Als Metalle sind Eisen oder Nicht-Eisenmetalle geeignet, wie sie insbesondere in der Automobilindustrie eingesetzt werden. Es sind jedoch auch andere Einsatzgebiete, z.B. in der Möbelindustrie oder im Industrieanlagenbau möglich. Bevorzugt ist die Verwendung der Überzugsmittel in der Mehrschichtlackierung. Dabei können je nach Rezeptierung sowohl Grundierungen als auch Füllerschichten, Basislack oder Decklackschichten, aber auch Klarlackschichten hergestellt werden. Bevorzugt ist die Verwendung als Klarlack oder Decklacküberzug.
Besonders bevorzugt ist die Verwendung in der Automobilreparaturlackierung. Die so erhaltenen Überzüge weisen ein gutes Glanzverhalten auf. Es entstehen vergilbungsfreie, lichtstabile sowie kratzbeständige Überzüge mit hohem Glanz. Ebenso weisen die erfindungsgemäßen Überzüge eine hohe Chemikalienbeständigkeit, z.B. Benzinfestigkeit oder Säurefestigkeit auf.
In den nachfolgenden Beispielen beziehen sich Teile (T) und %-Angaben auf das Gewicht.

Beispiel 1

a) Herstellung eines OH-Gruppen enthaltenden Acrylatharzes:

In einem 4-l-Reaktionskolben mit Rückflußkühler, Rührer und Tropftrichter werden 800 T Essigsäurebutylester vorgelegt und ständig mit trockenem Inertgas geschützt. Nach Aufheizen auf 100°C wird eine Mischung aus

| | |
|---|---|
| 900 T | Butylacetat |
| 550 T | Hydroxyethylacrylat |
| 200 T | Methylmethacrylat |
| 250 T | Styrol |
| 250 T | n-Butylacrylat |
| 50 T | Acrylsäure und |
| 35 T | Azo-bis-isobutyronitril |
| 10 T | tert. Butylperoctoat |
| 20 T | eines Reaktionsproduktes aus Acrylsäure und Polyethylenglykolmonomethylether mit einem Molekulargewicht von 350 |
| 100 T | Butylacetat |

innerhalb von 4 Stunden gleichmäßig zudosiert, wobei die Reaktionstemperatur auf 110°C gehalten wird. Eine halbe Stunde nach Zulaufende wird eine Lösung von 10 T tert. Butylperoctoat in 100 T Essigsäurebutylester zugegeben und anschließend 6 Stunden bei 110°C gehalten. Anschließend werden bei einem Vakuum von 400 mbar Restmonomere und Butylacetat auf einen FK von ca. 65 Gew.-% abdestilliert.

| | |
|---|---|
| Festkörper | 64,8 % |
| Säurezahl | 30 (= 52 mEqu COOH/100 g) |
| Polyethylenoxideinheiten | 27 mEqu pro 100 g |
| Hydroxylzahl | 200 |
| Viskosität | 31,5 Pas |
| Molmasse ($M_n$) | 7800 g/mol |
| ($M_w$) | 26000 g/mol |

(gemessen in THF gegen Polystyrolstandard im GPC)

b) Herstellung einer Dispersion

In einem 4-l-Reaktionskolben werden 1100 T vollentsalztes Wasser und 28,9 T Methyldiethanolamin gemischt und auf 90°C erwärmt. Innerhalb von 30 min. wird 800 T der vorstehend erhaltenen 90°C warmen Acrylatharzlösung eingerührt und danach 320 T flüchtige Substanzen abdestilliert, wobei nach und nach ein höheres Vakuum angelegt wird. Es wird soviel entsalztes Wasser zugesetzt, daß eine gut verarbeitbare Dispersion entsteht.

| | |
|---|---|
| Festkörper (30 min 150°C) | 33,4 % |
| pH-Wert | 7,2 |

Beispiel 2

a) Herstellung eines OH-Gruppen enthaltenden Acrylharzes:

Es wird wie im Beispiel 1 verfahren, mit folgenden Mengen:

| | |
|---|---|
| 900 T | Butylacetat |
| 450 T | Hydroxymethylmethacrylat |
| 250 T | Butylacrylat |
| 400 T | Methylmethacrylat |
| 25 T | Acrylsäure |
| 200 T | Styrol |
| 50 T | eines Reaktionsproduktes aus Methacrylsäure und Polyethylenglykolmonomethylether mit einem Molekulargewicht von 500 |
| 50 T | Azo-bis-isobutyronitril |
| 10 T | tert. Butylperoctoat |
| 100 T | Butylacetat |

Es wird auf einen FK von ca. 60 % abdestilliert.

| | |
|---|---|
| Festkörper | 59,5 % |
| Säurezahl | 17 (30 mEqu COOH/100 g) |
| Polyethylenoxideinheiten | 80 mEqu/100 g |
| Hydroxylzahl | 165 |
| Viskosität | 22,5 Pas |
| Molmasse ($M_n$) | 6900 |
| ($M_w$) | 20000 |

b) Herstellung einer Dispersion, wie in Beispiel 1b beschrieben, mit folgenden Mengen:

| | |
|---|---|
| 1100 T | vollentsalztes Wasser |
| 14,7 T | Dimethylisopropanolamin |
| 800 T | Acrylatharzlösung |

Es werden 330 T flüchtige Anteile abdestilliert und 81 g vollentsalztes Wasser zugesetzt.

| | |
|---|---|
| Festkörper | 30 % |
| pH-Wert | 7,4 |

Beispiel 3

a) Herstellung eines OH-Gruppen enthaltenden Acrylharzes:

Es wird wie in Beispiel 1a verfahren, mit folgenden Mengen:

| | |
|---|---|
| 900 T | Butylacetat |
| 300 T | Hydroxyethylmethacrylat |
| 300 T | Methylmethacrylat |
| 450 T | n-Butylacrylat |
| 200 T | Styrol |
| 20 T | Acrylsäure und |
| 40 T | eines Reaktionsproduktes aus Acrylsäure und Polyethylenglykolmonomethylether mit einem Molekulargewicht von 750 |
| 50 T | Azo-bis-isobutyronitril |
| 10 T | tert. Butylperoctoat |

100 T Butylacetat

Es wird auf einen FK von ca. 10 % abdestilliert.

| | |
|---|---|
| Festkörper | 60,3 % |
| Säurezahl | 12 (= 21 mEqu COOH/100 g) |
| Polyethylenoxideinheiten | 54 mEqu/100 g |
| Hydroxylzahl | 100 |
| Viskosität | 24,5 Pas |
| Molmasse ($M_n$) | 7400 |
| ($M_w$) | 26000 |

b) Herstellung einer Dispersion, wie in Beispiel 1b beschrieben, mit folgenden Mengen:

1100 T vollentsalztes Wasser
12,9 g Dimethylethanolamin
800 T Acrylatharzlösung

Es werden 340 T flüchtige Anteile abdestilliert und 237 g vollentsalztes Wasser zugegeben.

| | |
|---|---|
| Festkörper | 30,7 % |
| pH-Wert | 7,3 |

Beispiel 4 (Komponente B)

14 T des Reaktionsproduktes aus Trimethylolpropan und Tetramethylxylylendiisocyanat (1:3) (70%ig in Methoxypropylacetat) werden mit 54,4 T Hexamethylendiisocyanat vermischt. Kurz vor dem Einsatz als Komponente B werden 31,6 T Butoxyethanol zugemischt. Die Komponente hat eine Viskosität von 5 mPas (Festkörper 64,2 Gew.-%).

Beispiel 5 (2K-Füller)

Zu 55,2 T einer wäßrigen Acrylat-Dispersion nach Beispiel 1 werden 18,8 T vollentsalztes Wasser, 9,8 T Titandioxid, 0,6 T Eisenoxid, 14,9 T Bariumsulfat gegeben. Dazu werden 0,6 T Dimethylethanolamin gemischt und die Viskosität mit wenig Wasser eingestellt. Es wird auf einer Perlmühle auf die notwendige Kornfeinheit vermahlen. Der Festkörper des erhaltenen Füllers beträgt 43,5 %.

Zu 100 T der so erhaltenen Komponente A werden 22,5 T der Komponente B nach Beispiel 4 gegeben. Die Mischung weist eine Topfzeit von 8 Stunden auf, der Festkörper beträgt 58,3 %. Das Füllerüberzugsmittel wird auf mit einer wäßrigen Grundierung nach Beispiel 8 vorbeschichtete Stahlsubstrate aufgespritzt und 18 Stunden bei 20°C getrocknet. Die Schichtdicke des Füllers beträgt ca. 50 µm. Auf dieses Substrat wird dann ein nach Beispiel 8 hergestellter isocyanat-vernetzender Decklack aufgetragen und vernetzt.

Beispiel 6 (2K-met.Basislack)

Zu 58,0 T einer wäßrigen Acrylat-Dispersion nach Beispiel 2 werden 4,7 T vollentsalztes Wasser, 1,2 T mikronisiertes Titandioxid, 4,7 T Aluminium-Pigmente als 40 %ige Paste sowie 2,3 T Verdicker (50%) gegeben. Mit 29,1 T Wasser wird unter einem Rührwerk ca. 30 min. homogenisiert.

Zu 100 T der so erhaltenen Komponente A werden 17,6 T der Komponente B gegeben und gründlich homogenisiert. Die Mischung weist eine Topfzeit von 8 Stunden auf, der Festkörper ist ca. 32 %. Das Basislacküberzugsmittel wird auf handelsüblichen mit Kathaphoresegrundierung und Füller vorbeschichteten Stahlsubstraten aufgespritzt, 20 min. bei 20°C vorgetrocknet und dann mit einem handelsüblichen nicht-wäßrigen 2K-Klarlack überschichtet. Die Schichtdicke des erhaltenen Basecoats beträgt ca. 25 µm.

Beispiel 7 (2K-Klarlack)

Zu 78,2 T einer wäßrigen Acrylat-Dispersion nach Beispiel 2 werden 20,6 T vollentsalztes Wasser, 0,8 T eines

handelsüblichen Lichtschutzmittels sowie 0,4 T eines Verlaufsmittels zugemischt und bei 40°C in einem schnellaufenden Rührwerk 20 min. vermischt.

Zu 100 Teilen der so erhaltenen Komponente A werden 16,2 T der Komponente B nach Beispiel 5 gegeben und gründlich homogenisiert. Die Mischung weist eine Topfzeit von 8 Stunden auf, der Festkörper beträgt 27,5 %. Das Überzugsmittel wird auf mit erfindungsgemäßer Grundierung, Füller und Metallic-Basecoat vorbeschichtete Polypropylensubstrate aufgespritzt und 60 min. bei 60°C getrocknet. Die Schichtdicke des Klarlackes beträgt ca. 40 µm.

Die beschichteten Substrate nach Beispiel 5 bis 7 weisen einen hohen Glanz auf. Nach Feuchtraumbelastung nach DIN 50 017 tritt keine Enthaftung (Blasenbildung) des erfindungsgemäßen Überzugsmittels zu den benachbarten Schichten auf.

Vergleichsversuch A (2K-Klarlack)

Zu 78,2 T einer wäßrigen Dispersion nach Beispiel 2 werden 20,6 T vollentsalztes Wasser, 0,8 T eines handelsüblichen Lichtschutzmittels sowie 0,4 % eines Verlaufsmittels zugemischt und bei 40°C 20 min. vermischt (Komponente A).

Als Komponente B werden 67 T Hexamethylendiisocyanat mit 33 T Butylglykol gemischt und auf 5 mPas verdünnt.

Zu 100 T der Komponente A werden 21,4 T der Komponente B gegeben und gründlich homogenisiert. Die Mischung weist eine Topfzeit von maximal 30 min. auf, der Festkörper beträgt 29,8 %. Das Überzugsmittel wird auf mit handelsüblicher Grundierung, Füller und Metallic-Basecoat vorbeschichteten Polypropylensubstrate aufgespritzt und 60 min. bei 60°C getrocknet. Die Schichtdicke des Klarlackes beträgt ca. 40 µm.

Beispiel 8 (2K-Klarlack)

Zu 78,2 T einer wäßrigen Dispersion nach Beispiel 3 werden 20,6 T vollentsalztes Wasser, 0,8 T eines handelsüblichen Lichtschutzmittels sowie 0,4 T eines Verlaufsmittels zugemischt und bei 40°C 20 min. vermischt (Komponente A).

Als Komponente B werden 75 T eines Reaktionsproduktes aus Trimethylolpropan und Tetramethylxylylendiisocyanat (1:3) (70 %ig in Methoxypropylacetat) mit 25 T Butylglykol gemischt und auf 5 mPas verdünnt.

Zu 100 Teilen der Komponente A werden 32,5 Teile der Komponente B gegeben und gründlich homogenisiert. Die Mischung weist eine Topfzeit von > 10 Stunden auf, der Festkörper beträgt 29,2 %. Das Überzugsmittel wird auf handelsüblichen mit Grundierung, Füller und Metallic-Basecoat vorbeschichteten Polypropylensubstraten aufgespritzt und 60 min. bei 60°C getrocknet. Die Schichtdicke des Klarlackes beträgt ca. 40 µm.

Die Beispiele 7 und 8 zeigen im Vergleich mit dem Vergleichsversuch A eine längere Topfzeit. Beispiel 7 ergibt einen besonders kratzfesten und elastischen Lackfilm mit hohem Glanz.

**Patentansprüche**

**1.** Wasserverdünnbares Überzugsmittel, enthaltend

A) 40 bis 95 Gew.-% mindestens eines OH-Gruppen enthaltenden Bindemittels als wäßrige Dispersion eines Polymerisatharzes oder eines Gemisches von Polymerisatharzen auf der Basis olefinisch ungesättigter Verbindungen, wobei das Polymerisatharz oder das Gemisch im Durchschnitt eine OH-Zahl von 10 bis 300, ein Zahlenmittel der Molmasse (Mn) von 500 bis 200000 und jeweils bezogen auf 100 g Harzfestkörper einen Gehalt an Säurefunktionen von 1 bis weniger als 80 mEqu und einem Gehalt an Ethylenoxideinheiten von 1 bis weniger als 150 mEqu aufweist, wobei die Summe der Säurefunktionen und der Ethylenoxideinheiten von 2 bis 200 mEqu beträgt, wobei die Säurefunktionen gegebenenfalls zumindest teilweise neutralisiert sind,

B) 60 - 5 Gew.-% eines oder mehrerer Polyisocyanate mit mehr als einer freien Isocyanatgruppe, die bei Raumtemperatur, gegebenenfalls unter Zusatz eines oder mehrerer organischer Lösemittel, flüssig sind, wobei sich die Gewichtsprozente von A) und B) jeweils auf den Harz-Festkörpergehalt beziehen und auf 100 Gew.-% addieren, sowie

C) gegebenenfalls ein oder mehrere zusätzliche Bindemittel, übliche Pigmente, Füllstoffe und/oder lackübliche Additive und Hilfsstoffe.

**2.** Überzugsmittel nach Anspruch 1, worin die Polymerisatharze der Komponente A) hergestellt wurden durch Copolymerisation von einem oder mehreren olefinisch ungesättigten Monomeren unter Mitverwendung von einem

oder mehreren einpolymerisierbaren ungesättigten Polyethylenoxiden der allgemeinen Formel

$$CH_2{=}CR\text{-}X\text{-}(CH_2\text{-}CHR\text{-}O)_m\text{-}(CH_2\text{-}CH_2\text{-}O)_n\text{-}R$$

oder

$$CH_2{=}CR\text{-}X\text{-}(CH_2)_o\text{-}Y\text{-}(CH_2\text{-}CHR\text{-}O)_m\text{-}(CH_2\text{-}CH_2\text{-}O)_n\text{-}R$$

worin R = -H oder $C_1$-$C_4$-Alkyl,
wobei die Reste R gleich oder verschieden sein können,

X = -COO-, -CONH-, -O- oder $-CH_2-$
n = 2 bis 90
m = 0 bis 40
Y = -O- oder -NH-
o = 1 bis 4,

wobei mehr als 40 Gew.-% der Alkylenoxideinheiten Ethylenoxideinheiten sind.

**3.** Wasserverdünnbares Überzugsmittel nach Anspruch 1 oder 2, worin die Polyisocyanate der Komponenten B) eines oder mehrere bei Raumtemperatur, gegebenenfalls unter Zusatz eines oder mehrerer organischer Lösemittel, flüssiger Diisocyanate mit mehr als einer freien Isocyanatgruppe, mit der allgemeinen Formel I

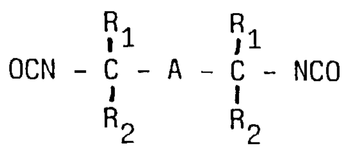

(I)

sind,
worin die Reste $R_1$ und $R_2$ jeweils gleich oder verschieden sein können, und

$R_1$ = -H oder $-C_nH_{2n+1}$
$R_2$ = $-C_n H_{2n+1}$

wobei

n = eine ganze Zahl von 1 bis 6 und
A= eine einfache Bindung, ein aromatischer oder alicyclischer Rest, oder ein linearer oder verzweigter aliphatischer Rest mit 1 bis 12 Kohlenstoffatomen ist,

die im Gemisch mit einem oder mehreren davon verschiedenen Polyisocyanaten mit mehr als einer freien Isocyanatgruppe, die bei Raumtemperatur, gegebenenfalls durch Zusatz einer oder mehrerer organischer Lösemittel flüssig sind, vorliegen können.

**4.** Wasserverdünnbares Überzugsmittel nach einem der vorhergehenden Ansprüche, worin das Bindemittel der Komponente A ein Gemisch aus einem oder mehreren Polymerisatharze mit Säurefunktionen und einem oder mehreren Polymerisatharzen mit mindestens einer seitenständigen, Ethylenoxideinheiten enthaltenden Kette ist.

**5.** Wasserverdünnbares Überzugsmittel nach einem der vorhergehenden Ansprüche, worin das Polymerisatharzgemisch der Komponente A aus einer Carboxylgruppen und Hydroxylgruppen enthaltenden Komponente A1 und einer Hydroxylgruppen enthaltenden Komponente A2 besteht.

6. Wasserverdünnbares Überzugsmittel nach einem der vorhergehenden Ansprüche, worin die flüssigen oder mit Lösemittel flüssigen Polyisocyanate der Komponente B eine Viskosität von 0,5 bis 2000 mPa.s aufweisen.

7. Wasserverdünnbares Überzugsmittel nach einem der vorhergehenden Ansprüche, worin die Polyisocyanate der Komponente B in einem oder mehreren wasserverdünnbaren organischen Lösemitteln mit einem Festkörpergehalt von über 40 Gew.-% vorliegen.

8. Wasserverdünnbares Überzugsmittel nach Anspruch 7, worin als Lösemittel Alkoxyalkanole, Ketoalkohole und/oder sterisch behinderte Alkohole oder Glykole verwendet werden.

9. Wasserverdünnbares Überzugsmittel nach einem der Ansprüche 3 bis 8, worin in der Komponente B 1 - 60 Gew.-% eines oder mehrerer Diisocyanate der allgemeinen Formel I, bezogen auf das Gesamtgewicht der vorhandenen Di- und Polyisocyanate, vorhanden sind.

10. Wasserverdünnbares Überzugsmittel nach einem der Ansprüche 1 bis 9, das als zusätzliche Bindemittel ein oder mehrere Polyurethanharze enthält.

11. Wasserverdünnbares Überzugsmittel nach einem der vorhergehenden Ansprüche, worin die Komponente A) ein oder mehrere Di- und/oder Polyamine mit primären und/oder sekundären Aminogruppen enthält.

12. Verfahren zur Herstellung eines wäßrigen Überzugsmittels gemäß einem der Ansprüche 1 bis 11, dadurch gekennzeichnet, daß man unmittelbar vor der Anwendung

A) 40 - 95 Gew.-% einer wäßrigen Dispersion wie in Anspruch 1 definiert,

B) 60 - 5 Gew.-% eines oder mehrerer Polyisocyanate mit mehr als einer freien Isocyanatgruppe, die bei Raumtemperatur flüssig sind, oder die man gegebenenfalls unter Zusatz eines oder mehrerer organischer Lösemittel flüssig macht, vermischt, wobei sich die Gew.-% von A) und B) jeweils auf den Harz-Festkörpergehalt beziehen und auf 100 Gew.-% addieren, wobei man der Komponente A) und/oder B) vor dem Vermischen oder dem Gemisch aus A) und B) gegebenenfalls

C) ein oder mehrere zusätzliche Bindemittel, übliche Pigmente, Füllstoffe und/oder lackübliche Additive und Hilfsstoffe beimischt.

13. Verfahren nach Anspruch 12, dadurch gekennzeichnet, daß man das oder die Polyisocyanate in einem oder mehreren organischen, mit Wasser mischbaren Lösemitteln verflüssigt.

14. Verwendung der wäßrigen Überzugsmittel nach einem der Ansprüche 1 bis 11 bei der Herstellung von Mehrschichtlackierungen.

15. Verwendung der wäßrigen Überzugsmittel nach einem der Ansprüche 1 bis 11 bei der Lackierung von temperaturempfindlicher Substrate, bei Trockentemperaturen von 25 bis 80°C.

**Claims**

1. A water-thinnable coating medium, containing

A) 40 to 95 % by weight of a binder vehicle which contains OH groups, as an aqueous dispersion of a polymer resin or of a mixture of polymer resins based on olefinically unsaturated compounds, wherein the polymer resin or the mixture has, on average, an OH number from 10 to 300, a number average molecular weight (Mn) from 500 to 200,000 and, with respect to 100 g resin solids in each case, a content of acid functions from 1 to less than 80 milliequivalents and a content of ethylene oxide units from 1 to less than 150 milliequivalents, wherein the sum of the acid functions and of the ethylene oxide units is from 2 to 200 milliequivalents, wherein the acid functions are at least partially neutralised,

B) 60 - 5 % by weight of one or more polyisocyanates containing more than one free isocyanate group, which are liquid at room temperature, optionally with the addition of one or more organic solvents, wherein the percentages by weight of A) and B) are given with respect to the resin solids in each case and add up to 100 % by weight, as well as

C) optionally one or more additional binder vehicles, customary pigments, extenders and/or customary lacquer additives and adjuvant substances.

**2.** A coating medium according to claim 1, wherein the polymer resins of component A) have been produced by the copolymerisation of one or more olefinically unsaturated monomers with the use in conjunction of one or more unsaturated polyethylene oxides which can be polymerised in and which are of general formula

$$CH_2{=}CR\text{-}X\text{-}(CH_2\text{-}CHR\text{-}O)_m\text{-}(CH_2\text{-}CH_2\text{-}O)_n\text{-}R$$

or

$$CH_2{=}CR\text{-}X\text{-}(CH_2)_o\text{-}Y\text{-}(CH_2\text{-}CHR\text{-}O)_m\text{-}(CH_2\text{-}CH_2\text{-}O)_n\text{-}R$$

where R = -H or $C_1$-$C_4$ alkyl,
wherein the R radicals may be the same or different,

X = -COO-, -CONH-, -O- or $-CH_2-$
n = 2 to 90
m = 0 to 40
Y = -O- or -NH-
o = 1 to 4,

wherein more than 40 % by weight of the alkylene oxide units are ethylene oxide units.

**3.** A water-thinnable coating medium according to claim 1 or 2, wherein the polyisocyanates of component B) are one or more diisocyanates which contain more than one free isocyanate group, which are liquid at room temperature, optionally with the addition of one or more organic solvents, and which are of general formula I

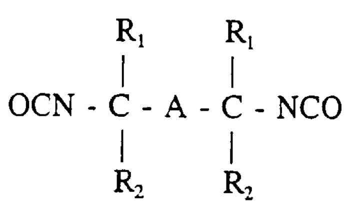

(I)

where the $R_1$ and $R_2$ radicals may be the same or different in each case, and

$R_1$ = -H or $-C_nH_{2n+1}$
$R_2$ = $-C_nH_{2n+1}$

where n is an integer from 1 to 6, and

A = a single bond, an aromatic or alicyclic radical, or a linear or branched aliphatic radical containing 1 to 12 carbon atoms,

which may be present in admixture with one or more polyisocyanates which are different therefrom, which contain more than one free isocyanate group, and which are liquid at room temperature, optionally with the addition of one or more organic solvents.

**4.** A water-thinnable coating medium according to any one of the preceding claims, wherein the binder vehicle of component A) is a mixture of one or more polymer resins comprising acid functions and one or more polymer resins comprising at least one side chain containing ethylene oxide units.

**5.** A water-thinnable coating medium according to any one of the preceding claims, wherein the polymer resin mixture of component A) consists of a component A1 which contains carboxyl groups and hydroxyl groups and of a component A2 which contains hydroxyl groups.

**6.** A water-thinnable coating medium according to any one of the preceding claims, wherein the polyisocyanates of component B), which are liquid or are liquefied with solvent, have a viscosity from 0.5 to 2000 mPa.s.

**7.** A water-thinnable coating medium according to any one of the preceding claims, wherein the polyisocyanates of component B) are present in one or more water-thinnable organic solvents at a solids content of more than 40 % by weight.

**8.** A water-thinnable coating medium according to claim 7, wherein alkoxyalkanols, keto alcohols and/or sterically hindered alcohols or glycols are used as solvents.

**9.** A water-thinnable coating medium according to any one of claims 3 to 8, wherein 1 - 60 % by weight of one or more isocyanates of general formula I are present in component B) with respect to the total weight of di- and polyisocyanates present.

**10.** A water-thinnable coating medium according to any one of claims 1 to 9, which contains one or more polyurethane resins as additional binder vehicles.

**11.** A water-thinnable coating medium according to any one of the preceding claims, wherein component A) contains one or more di- and/or polyamines comprising primary and/or secondary amino groups.

**12.** A method of producing an aqueous coating medium according to any one of claims 1 to 11, characterised in that

A) 40 - 95 % by weight of an aqueous dispersion as defined in claim 1, and

B) 60 - 5 % by weight of one or more polyisocyanates which contain more than one free isocyanate group and which are liquid at room temperature or which are optionally liquefied by the addition of one or more organic solvents,

are mixed immediately before application, wherein the percentages by weight of A) and B) are each given with respect to the resin solids content and add up to 100 % by weight, wherein
C) one or more additional binder vehicles, customary pigments, extenders and/or customary lacquer additives and adjuvant substances are optionally admixed with component A) and/or B) before mixing or with the mixture of A) and B).

**13.** A method according to claim 12, characterised in that the polyisocyanate or polyisocyanates is/are liquefied in one or more organic solvents which are miscible with water.

**14.** The use of the aqueous coating media according to any one of claims 1 to 11 for the production of multi-layer coatings.

**15.** The use of the aqueous coating media according to any one of claims 1 to 11 for the coating of temperature-sensitive substrates, with drying temperatures of 25 to 80°C.

**Revendications**

**1.** Produit de revêtement diluable à l'eau, contenant

A) 40 à 95 % en poids d'au moins un liant contenant des groupes OH, sous la forme d'une dispersion aqueuse d'une résine polymère ou d'un mélange de résines polymères à base de composés à insaturation oléfinique,

la résine polymère ou le mélange ayant en moyenne un indice d'OH de 10 à 300, une masse moléculaire moyenne, moyenne en nombre, Mn de 500 à 200 000, et, pour 100 g de matières résineuses solides dans tous les cas, une teneur en fonctions acides allant de 1 à moins de 80 méq. et une teneur en motifs d'oxyde d'éthylène allant de 1 à moins de 150 méq., la somme des fonctions acides et des motifs oxyde d'éthylène représentant de 2 à 200 méq., les fonctions acides étant le cas échéant neutralisées, en partie au moins,
B) 60 à 5 % en poids, d'un ou plusieurs polyisocyanates à plus d'un groupe isocyanate libre, qui sont liquides à température ambiante, le cas échéant après adjonction d'un ou plusieurs solvants organiques, les pourcentages en poids de A) et B) se rapportant aux matières solides résineuses en se complétant à 100 % en poids, ainsi que
C) le cas échéant, un ou plusieurs autres liants, des pigments et matières de charge usuels et/ou des additifs et produits auxiliaires usuels dans l'industrie des peintures et vernis.

2. Produit de revêtement selon revendication 1, dans lequel les résines polymères du composant A) ont été préparées par copolymérisation d'un ou plusieurs monomères à insaturation oléfinique avec utilisation conjointe d'un ou plusieurs oxydes de polyéthylène insaturés copolymérisables de formule générale

$$CH_2=CR\text{-}X\text{-}(CH_2\text{-}CHR\text{-}O)_m\text{-}(CH_2\text{-}CH_2\text{-}O)_nR,$$

et

$$CH_2=CR\text{-}X\text{-}(CH_2)o\text{-}Y\text{-}(CH_2\text{-}CHR\text{-}O)_m\text{-}(CH_2\text{-}CH_2\text{-}O)_nR,$$

dans lesquelles R = -H ou alkyle en C1-C4,
les divers symboles R pouvant avoir des significations identiques ou différentes,

X = -COO-, -CONH-, -O- ou $-CH_2-$
n = 2 à 90,
m = 0 à 40,
Y = -O- ou -NH-
o = 1 à 4

plus de 40 % en poids des motifs d'oxydes d'alkylène consistant en motifs d'oxyde d'éthylène.

3. Produit de revêtement diluable à l'eau selon revendication 1 ou 2 dans lequel les polyisocyanates du composant B) consistent en un ou plusieurs diisocyanates liquides à température ambiante, le cas échéant après adjonction d'un ou plusieurs solvants organiques, qui contiennent plus d'un groupe isocyanate libre et répondent à la formule générale I

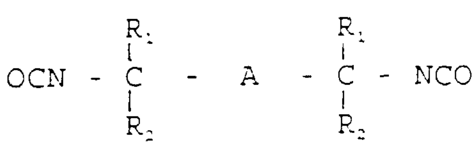

(I)

dans laquelle $R_1$ et $R_2$ peuvent avoir des significations identiques ou différentes et représentent

$R_1$ = -H ou $-C_nH_{2n+1}$
$R_2$ = $-C_nH_{2n+1}$,
n est un nombre entier allant de 1 à 6 et
A représente une liaison simple, un radical aromatique ou alicyclique ou un radical aliphatique linéaire ou ramifié en C1-C12,

qui peuvent être à l'état de mélanges avec un ou plusieurs autres polyisocyanates contenant plus d'un groupe

isocyanate libre, et liquides à température ambiante, éventuellement après adjonction d'un ou plusieurs solvants organiques.

**4.** Produit de revêtement diluable à l'eau selon une des revendications qui précèdent, dans lequel le liant du composant A) est un mélange d'une ou plusieurs résines polymères à fonctions acides et d'une ou plusieurs résines polymères à au moins une chaîne latérale contenant des motifs d'oxyde d'éthylène.

**5.** Produit de revêtement diluable à l'eau selon une des revendications qui précèdent, dans lequel le mélange de polymères du composant A) consiste en un composant $A_1$) contenant des groupes carboxyle et des groupes hydroxy et un composant $A_2$) contenant des groupes hydroxy.

**6.** Produit de revêtement diluable à l'eau selon une des revendications qui précèdent, dans lequel les polyisocyanates liquides ou liquéfiés par addition de solvants du composant B) ont une viscosité de 0,5 à 2000 mPa.s.

**7.** Produit de revêtement diluable à l'eau selon une des revendications qui précèdent, dans lequel les polyisocyanates du composant B sont contenus dans un ou plusieurs solvants organiques diluables à l'eau à une teneur en matières solides supérieure à 40 % en poids.

**8.** Produit de revêtement diluable à l'eau selon revendication 7, dans lequel on utilise en tant que solvants des alcoxyalcanols, des cétoalcools et/ou des alcools ou glycols faisant l'objet d'un empêchement stérique.

**9.** Produit de revêtement diluable à l'eau selon une des revendications 3 à 8, dans lequel le composant B contient de 1 à 60 %, en poids d'un ou plusieurs diisocyanates de formule générale I par rapport au poids total des di- et poly-isocyanates présents.

**10.** Produit de revêtement diluable à l'eau selon une des revendications 1 à 9, contenant, en tant que liants supplémentaires, une ou plusieurs résines de polyuréthannes.

**11.** Produit de revêtement diluable à l'eau selon une des revendications qui précèdent, dans lequel le composant A contient une ou plusieurs di- et/ou poly-amines à groupes amino primaires et/ou secondaires.

**12.** Procédé de préparation d'un produit de revêtement aqueux selon une des revendications 1 à 11, caractérisé en ce que immédiatement avant l'utilisation, on mélange

A) 40 à 95 % en poids d'une dispersion aqueuse telle que définie dans la revendication 1,
B) 60 à 5 % en poids d'un ou plusieurs polyisocyanates à plus d'un groupe isocyanate libre, qui sont liquides à température ou le cas échéant ont été liquéfiés par adjonction d'un ou plusieurs solvants organiques, les pourcentages en poids de A) et B) se rapportant aux matières solides résineuses et se complétant à 100 % en poids,

et le cas échéant on mélange avec le compoant A) et/ou le composant B), avant leur mélange, ou au mélange de A) et B)
C) un ou plusieurs liants supplémentaires, des pigments, matières de charge usuelles et/ou additifs et produits auxiliaires usuels dans l'industrie des peintures et vernis.

**13.** Procédé selon revendication 12, caractérisé en ce que le ou les polyisocyanates sont liquéfiés à l'aide d'un ou plusieurs solvants organiques miscibles à l'eau.

**14.** Utilisation des produits de revêtement aqueux selon une des revendications 1 à 11 pour l'application de revêtement à plusieurs couches.

**15.** Utilisation des produits de revêtements aqueux selon une des revendications 1 à 11 pour l'application de revêtements sur des supports sensibles à la température, à des températures de séchage de 25 à 80°C.